# EUROPEAN PATENT SPECIFICATION

(11) **EP 3 085 590 B1**
(45) Date of publication and mention of the grant of the patent: **31.01.2018**
(21) Application number: 15193127.6
(22) Date of filing: 05.11.2015
(51) Int. Cl.: B60T 8/17, B60T 8/32, B60T 15/18, B60T 15/24

(54) **DEVICE FOR CONTROLLING THE BRAKING OF A TRAILER**
VORRICHTUNG ZUR STEUERUNG DES BREMSSYSTEMS EINES ANHÄNGERFAHRZEUGS
UNITE' DE CONTROLE POUR UN SYSTÈME DE FREINAGE D'UN REMORQUE

(30) Priority: 11.11.2014 IT MO20140333
(43) Date of publication of application: 26.10.2016
(73) Proprietor: Studio Tecnico 6 M S.R.L., 41123 Modena (IT)
(72) Inventor: Mamei, Eronne, 41123 Modena (IT); Mamei, Enrico, 41123 Modena (IT); Mamei, Andrea, 41123 Modena (IT)
(74) Representative: Zoli, Filippo

(56) References cited:
- EP-A1- 1 504 976
- EP-A1- 2 305 524
- EP-A2- 0 387 004
- EP-A2- 1 759 949
- WO-A1-2014/001876
- DE-A1- 3 737 579
- DE-A1- 19 514 733
- DE-A1-102011 101 438
- FR-A1- 2 130 470
- US-A- 5 046 786

## Description

The present invention relates to a device for controlling the braking of a trailer. Similar devices are known from the patent documents DE 37 37 579 A1 or DE 195 147 33 A1.

It is known that in the case of a trailer towed by a prime mover their braking systems are operatively connected so that the braking of the prime mover actuated by the operator also causes the braking of the towed trailer.

The braking system of the trailer is therefore piloted by the braking system of the prime mover in order to synchronize the braking forces acting on these.

It follows therefore, that the moment the operator actuates the brake pedal of the prime mover, he/she intervenes on the wheels of same and, by means of a braking valve (called brake-trailer valve), also on the braking system of the trailer.

The devices for braking a trailer of known type generally comprise a hollow body in which are defined a plurality of gaps, among which a supply gap of a work fluid, a discharge gap of the work fluid, and a gap connectable to the positive braking system of the trailer. Inside such hollow body, a distributor element is accommodated sliding, able to selectively place in communication the braking gap with the supply gap or with the discharge gap.

As is known, to date towing vehicles are connected to their respective trailers by means of a connection device comprising a male joint associated with the towing vehicle and a corresponding female joint associated with the trailer.

More in particular, such connection device permits placing in communication the braking system of the towing vehicle with the positive one of the trailer, so that the braking of the towing vehicle actuated by the operator also causes the braking of the towed trailer.

The braking system of the trailer is therefore piloted by the braking system of the prime mover in order to synchronize the braking forces acting on same.

Some regulations currently in the approval phase require that the connection device between the towing vehicle and its trailer be provided with a pair of male joints able to be inserted inside a pair of relative female joints.

In particular, the female joints can be connected to a control line able to supply the braking system of the trailer, and to an additional line able to disable the automatic brake and/or the parking brake of the trailer itself, respectively. In emergency situations, the additional line must be suitably connected to a discharge tank so as to allow the activation of the automatic brake and/or the parking brake of the trailer and, therefore, the braking of same.

The main aim of the present invention is to provide a device for controlling the braking of a trailer which at the same time permits performing the functions of a brake-trailer valve and for managing the additional line in emergency situations.

Within this aim, one object of the present invention is to allow the activation of the automatic brake and/or the parking brake of the trailer even in the event of the supply being interrupted in the brake-trailer valve.

Another object of the present invention is to permit the operation of the automatic brake and/or the parking brake of the trailer after a predefined time in case of a break along the control line.

Yet another object of the device forming the subject of the present invention is to permit the mechanical command of both the service braking and the emergency braking of the trailer.

Another object of the present invention is to provide a device for controlling the braking of a trailer which allows to overcome the mentioned drawbacks of the prior art within the ambit of a simple, rational, easy, effective to use as well as affordable solution.

The above mentioned objects are achieved by the present device for controlling the braking of a trailer according to the claim 1.

Other characteristics and advantages of the present invention will become better evident from the description of a preferred but not exclusive embodiment of a device for controlling the braking of a trailer, illustrated by way of an indicative, but non-limiting, example in the accompanying drawings in which:

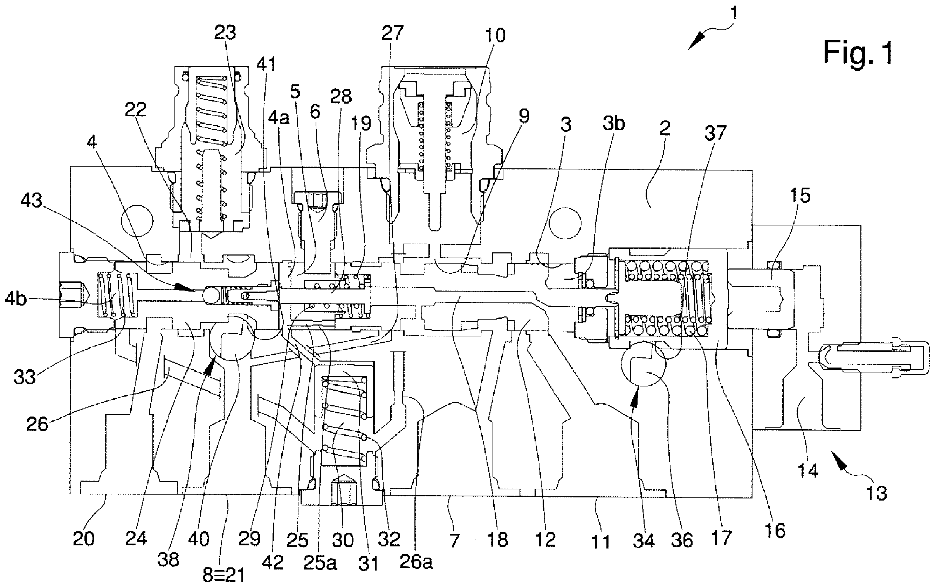

Figure 1 is a sectional view of a device according to the invention with the distributor element in the idle position and the spool in the normal operating position;

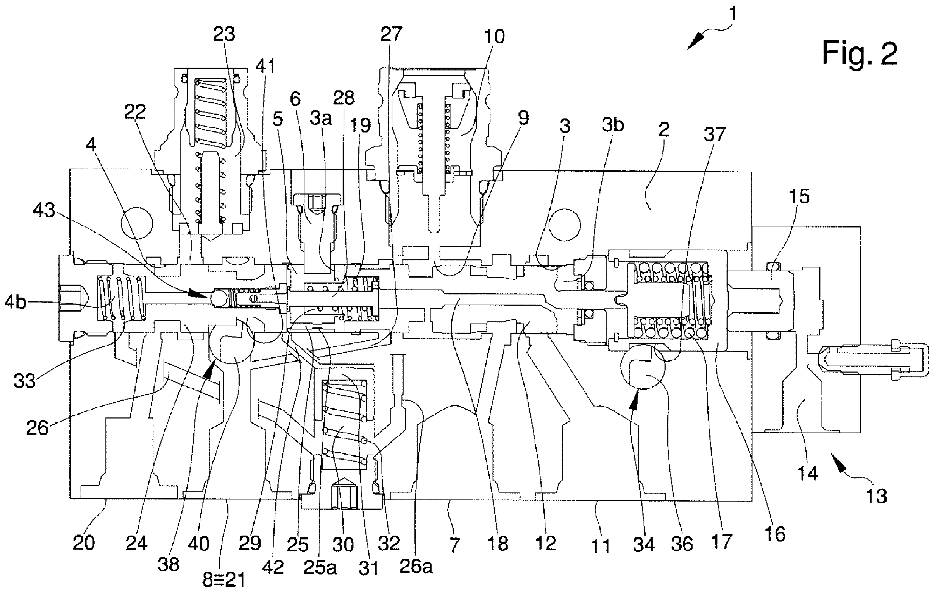

Figure 2 is a sectional view of the device of Figure 1 with the distributor element in the braking position and the spool in the normal operating position;

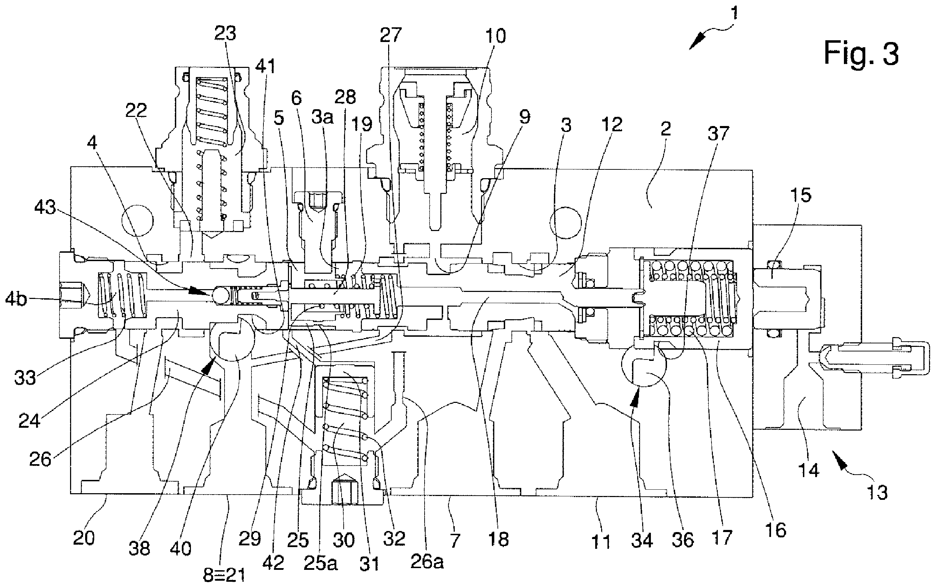

Figure 3 is a sectional view of the device of Figure 1 with the distributor element in the braking position and the spool in the emergency position;

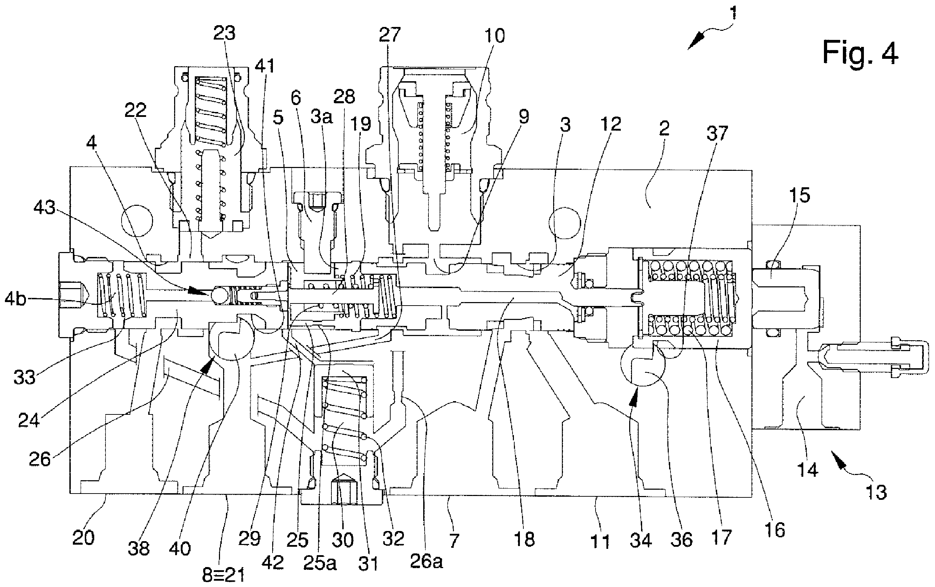

Figure 4 is a sectional view of the device of Figure 3 with the dispensing element in the dispensing position;

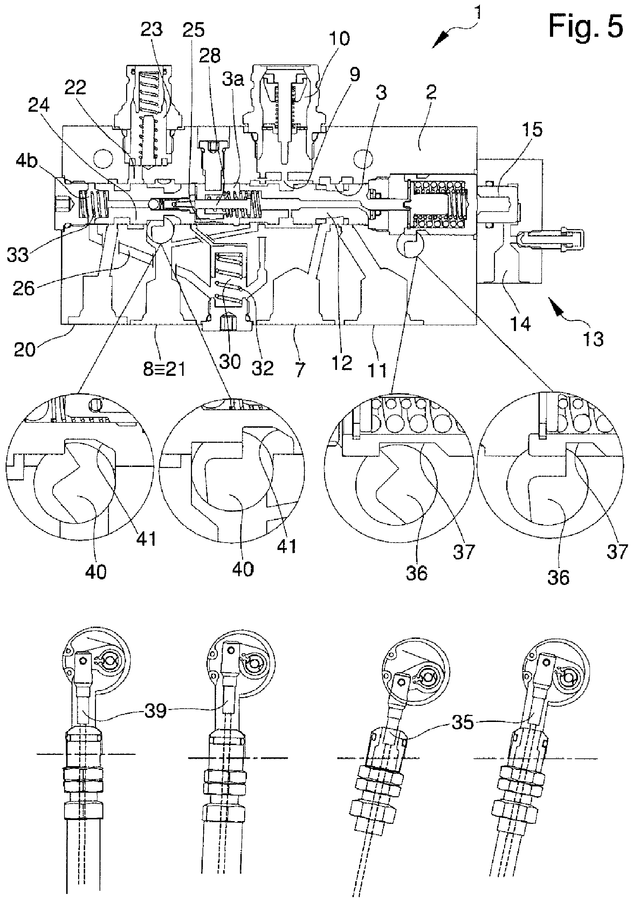

Figure 5 is a sectional view of the device of figure 1 and of the corresponding mechanical command means.

With particular reference to such Figures, globally indicated with reference number 1 is a device for controlling the braking of a trailer.

The device 1 comprises a body 2 in which are formed at least a first seat 3 and at least a second seat 4 communicating with each other and between which is placed at least a separation element 5.

Suitably, the device 1 comprises a locking element 6, inserted through the body 2, of the separation element 5.

The first seat 3 is communicating with at least a main gap 7, connectable to a source of a work fluid at a first pressure, at least a discharge gap 8 connectable to a discharge tank, at least a braking gap 9, communicating with a first male joint 10 connectable in turn to the braking system of a trailer.

In the embodiment shown in the Figures, the first seat 3 is also communicating with at least a service gap 11 connectable to at least an external user point.

In an alternative embodiment, not shown in the Figures, the device 1 also comprises a load sensing line communicating with the braking gap 9.

Between the braking gap 9 and the first male joint 10 a constriction is located able to define a pressure difference at its ends when it is crossed by an oil flow. Within the first seat 3 is slidably housed at least one distributor element 12 movable between an idle position, in which the main gap 7 is placed in communication with the service gap 11, and at least a braking position, in which the main gap 7 is placed in communication with the braking gap 9, so as to convey the pressurized work fluid to the braking system of the trailer.

Piloting means 13 of the distributor element 12 are also provided connectable to the braking system of a towing vehicle.

The piloting means 13 comprise a piloting channel 14 connectable to the brake pump of the towing vehicle and acting on a piloting element 15 in turn able to interact with the distributor element 12.

More particularly, the piloting element 15 is arranged resting against a thrust element 16 substantially cup-shaped and inside which is housed an extremity of the distributor element 12, between the latter and the bottom of the thrust element 16 being placed elastic means 17 able to apply a predefined force on the distributor element itself following the increase in pressure in the piloting channel 14 and, therefore, the displacement of the piloting element 15.

The distributor element 12 has a reaction surface communicating with the braking gap 9 and acting in the direction opposite to the piloting means 13.

In the embodiment shown in the Figures, inside the first seat 3 are defined a first and a second chamber, identified by the reference numbers 3a and 3b respectively, which act on the distributor element 12 on opposite sides of same.

As can be seen in the Figures, the first chamber 3a acts on the distributor element 12 on the opposite side with respect to the piloting means 13.

The first and the second chambers 3a and 3b are both communicating with the braking gap 9. More in detail, the first and the second chambers 3a and 3b are mutually communicating through a channel 18 obtained inside the distributor element 12 and have a different thrust area the one from the other, the difference of which defines the above-mentioned reaction surface.

Suitably, between the separation element 5 and the distributor element 12 are placed elastic means 19 able to contrast the displacement of the distributor element itself towards the braking position.

The second seat 4 is communicating with at least a secondary port 20, connectable to a source of the work fluid at a second pressure (lower than the first above-mentioned pressure and generally between 15 and 35 bar), at least a discharge port 21 connectable to a discharge tank, at least an additional port 22 communicating with a second male joint 23 connectable to the automatic brake and/or parking brake of the trailer.

Within the second seat 4 is slidably housed at least a spool 24 movable between a normal operating position, in which the secondary port 20 is placed in communication with the additional port 22 so as to keep the automatic and/or parking brake disabled, and at least an emergency position, in which the secondary port 20 is placed in communication with the discharge port 21, so as to allow the activation of the automatic and/or parking brake of the trailer.

On the spool 24 act, on opposite sides of same, a third chamber 4a and a fourth chamber 4b, where the third chamber 4a acts on the spool 24 to move it from the normal operating position towards the emergency position.

According to the invention, there is at least a first channel 25 connecting the third chamber 4a with the braking gap 9 and at least a second channel 26 connecting the fourth chamber 4b with the first male joint 10.

In the embodiment shown in the Figures, the first channel 25 places in communication the first chamber 3a with the fourth chamber 4a 4b?.

Conveniently, along the first channel 25 a constriction 25a is arranged.

Advantageously, the body 2 is made in a single piece. Alternative embodiments cannot however be ruled out wherein the body 2 is made in several parts integrally associated with one another.

Preferably, the first and the second seats 3, 4 have a substantially circular shape and, in the case in which the body 2 is defined in a single piece, are arranged coaxially the one to the other.

In the embodiment shown in the Figures, the discharge gap 8 coincides with the discharge port 21.

More particularly, within the body 2 is defined a third channel 27 connecting the first seat 3 with the discharge port 21.

Advantageously, the device 1 also comprises at least an interacting element 28 between the distributor element 12 and the spool 24.

In the preferred embodiment, the interacting element 28, of the type e.g. of a pin, is inserted sliding through the separation element 5.

The interacting element 28 is able to push the spool 24 towards the emergency position in case of no pressure occurs of the work fluid inside the first seat 3 and coming from the main gap 7.

More in detail, the distributor element 12 has a further work position, located downstream of the braking position, in which it contacts the interacting element 28 pushing it towards the spool 24 so as to move the latter towards the emergency position.

In the case of no work fluid coming from the main gap 7 and, at the same time, of the operator operating the brakes of the towing vehicle thus causing the operation of the piloting means 13 and the consequent displacement of the distributor element 12 from the idle position towards the braking position, the lack of pressure in the chambers 3a and 3b able to counterbalance the force applied by the elastic means 17 involves an over-stroke of the distributor element itself, which then moves into contact with the interacting element 28.

The interacting element 28, sliding through the separation element 5, in turn contacts the spool 24 thus causing the displacement thereof from the normal operating position to the emergency position.

Preferably, there are elastic means 29 acting on the interacting element 28 counteracting its displacement towards the spool 24. The elastic means 29, preferably pre-compressed, permit reducing the force acting on the spool 24 and due to the elastic means 17 acting on the distributor element 12,

Advantageously, the device 1 comprises at least an accumulation tank 30 containing a predetermined amount of work fluid and able to dispense it inside the first male joint 10 as a result of a predetermined difference in pressure between the braking gap 9 and the first male joint itself.

More particularly, the tank 30 is interposed between the third chamber 4a which, as described previously, is communicating with the first chamber 3a and, therefore, with the braking gap 9, and the first male joint 10. The third chamber 4a is placed in communication with the tank 30 via a duct 42.

As can be seen from the Figures, the tank 30 is arranged along the second channel 26 which connects the fourth chamber 4b to the first male joint 10.

Along the second channel 26, in the stretch between the tank 30 and the first male joint 10, a constriction 26a is located.

Conveniently, inside the tank 30 is placed at least a dispensing element 31 of the work fluid, movable between an idle position, in which the work fluid is contained inside the tank itself, and a dispensing position, in which the work fluid is pushed inside the first male joint 10. The third chamber 4a and the second channel 26 act on the dispensing element 31 on opposite sides of same.

More in detail, between the dispensing element 31, e.g. glass-shaped, and the tank 30 are placed first elastic means 32 able to push the dispensing element itself towards the idle position.

It follows, therefore, that the dispensing element 31 moves from the idle position towards the dispensing position when the force applied on the dispensing element itself by the pressure in the third chamber 4a exceeds the sum of the force caused by the pressure present in the first male joint 10 and that of the first elastic means 32.

Within the fourth chamber 4b are also arranged second elastic means 33 acting on the spool 24 to counteract its displacement from the normal operating position towards the emergency position.

Advantageously, the force (meaning the ratio between the load and the area on which the same acts) applied by the first elastic means 32 on the dispensing element 31 is lower than that applied by the second elastic means 33 on the spool 24, so that when reaching the predefined pressure between the third chamber 4a and the first male joint 10, the dispensing element 31 is displaced first with respect to the spool 24.

The function of the tank 30 is to delay the activation of the spool 24 due to the difference in pressure between the braking gap 9 and the first male joint 10 so that the dispensing of the work fluid contained inside it occurs following a break along the control line and not in normal operating conditions.

The device 1 also comprises first mechanical control means 34, operable to control the displacement of the distributor element 12 from the idle position towards the braking position.

In the embodiment shown in the Figures, the first control means 34 comprise at least a first lever 35, arranged externally to the body 2, connectable to the parking brake of the towing vehicle and able to interact with the distributor element 12.

More in particular, the first lever 35 acts on a first cam element 36 which has a tooth able to engage with a corresponding recess 37 defined on the thrust element 16.

The first lever 35 is therefore movable between a first work position, wherein the distributor element 12 is free to move, and a second work position, wherein the distributor element 12 is moved to the braking position by effect of the action applied on it by the elastic means 17 following the displacement of the thrust element 16.

Advantageously, the device 1 comprises second mechanical control means 38, operable to control the displacement of the spool 24 from the normal operating position towards the emergency position.

In the embodiment shown in the Figures, the second control means 38 comprise at least a second lever 39, arranged externally to the body 2, connectable to the parking brake of the towing vehicle and able to interact with the spool 24.

More in particular, the second lever 39 acts on a second cam element 40 which has a tooth able to engage with a corresponding recess 41 defined on the spool 24.

The second lever 39 is therefore movable between a first work position, wherein the spool 24 is free to move, and a second work position, wherein the spool 24 is moved to the emergency position by effect of the rotation of the second cam element 40 acting on the spool itself.

Advantageously, the spool 24 comprises a one-way valve 43 able to prevent the occurrence of backlashes on the second cam element 40 following the release of the brake pedal of the towing vehicle. In such case, in fact, due to the rapid decrease in pressure in the third chamber 4a the spool 24 would tend to move rapidly towards the normal operating position and thus risk damaging the second cam element 40. The valve 43 thus allows a part of the work fluid contained in the fourth chamber 4b to flow towards the third chamber 4a during the return of the spool 24 towards the normal operating position.

The body 2 also has a seat (not shown in detail in the Figures) able to allow the housing of a latch able to prevent the displacement of the distributor element 12 when the first male joint 10 is disconnected from the trailer (plug and brake function).

The operation of the present invention is as follows.

In normal operating conditions, until the brakes of the towing vehicle are operated, the distributor element 12 is in idle position, so that the main gap 7 is placed in communication with the service gap 11 and the braking gap 9 is placed in communication with the discharge gap 8.

Following the operation of the brakes of the towing vehicle, due to the increasing pressure in the piloting channel 14, the piloting element 15 acts on the thrust element 16 which, by moving, compresses the elastic means 17 which, consequently, push the distributor element 12 towards the braking position. Following the displacement of the distributor element 12 the constriction occurs of the connection between the main gap 7 and the service gap 11, thus causing a pressure increase in the main gap itself. After reaching the braking position, the main gap 7 is placed in communication with the braking gap 9 and, consequently, with the chambers 3a and 3b. The distributor element 12 therefore reaches a position of equilibrium wherein the force applied by the elastic means 17 is balanced by the force caused by the pressure in the chambers 3a and 3b and by the elastic means 19. In this operating condition, pressurized fluid is conveyed to the braking system of the trailer through the first male joint 10.

At the same time or alternatively to the command exercised by means of the piloting means 13, by operating the parking brake lever, the first lever 35 moves from the first work position to the second work position consequently causing the displacement of the thrust element 16 and, therefore, the braking of the trailer.

In the case in which, following the braking of the towing vehicle, it is not possible to achieve the braking of the trailer due to lack of supply of the pressurized fluid through the main gap 7, and therefore of the force applied by the pressure of the fluid itself in the chambers 3a and 3b, the distributor element 12 performs an over-stroke towards the spool 24 as a result of which it contacts the pin 28.

The pin 28, by sliding through the separation element 5, in turn pushes the spool 24 from the normal operating position to the emergency position, thereby bringing the additional port 22 in communication with the discharge port 21 and consequently causing the operation of the automatic and/or parking brake of the trailer.

The displacement of the spool 24 from the normal operating position to the emergency position also occurs in two other work conditions, i.e., following the achievement of a predefined pressure difference between the braking gap 9, and therefore the third chamber 4a, and the first male joint 10 and following the mechanical control exercised by means the second control means 38.

The first condition occurs, e.g., following a leak along the braking system of the trailer and, therefore, a drop in pressure inside the first male joint 10. In this case, when the difference in pressure between the braking gap 9 and the first male joint 10 reaches the predefined value, corresponding to the force applied by the first elastic means 32 on the dispensing element 31, the latter moves from the idle position towards the dispensing position, thus conveying the work fluid contained inside it inside the first male joint itself. Once the dispensing position has been reached, the pressure difference between the braking gap 9 and the first male joint 10, and therefore between the third and the fourth chambers 4a, 4b, causes the displacement of the spool 24 towards the emergency position.

As can be easily appreciated, the calibration of the first elastic means 32 and the constrictions 25a, 26a affect the time taken by the distributor element 12 to reach the dispensing position and, therefore, the time that elapses before the spool 24 moves to the emergency position.

The further condition in which the displacement occurs of the spool 24 in the emergency position corresponds, as described above, to the displacement of the second lever 39 from the first work position to the second work position. As a result of such displacement, the second cam element 40 mechanically moves the spool 24 to the emergency position.

It has in fact been ascertained how the described invention achieves the proposed objects and in particular the fact is underlined that the device forming the subject of the present invention performs the dual function of brake-trailer valve and multi-function block, making it possible to manage at the same time the service brake and the emergency brake of the trailer.

In particular, the use of a single body in which are obtained two seats communicating with each other allows optimizing the number of gaps and ports communicating with the seats and necessary for the operation of the device itself.

Again, the two seats communicating with one another, through the interacting element, also make possible the emergency braking of the trailer in the event of a supply failure affecting the work fluid through the main gap.

Not least, the device of the present invention permits the emergency braking of the trailer in three distinct conditions, i.e., in case of the supply failure of the work fluid through the main gap, in case of leaks along the braking system of the trailer or in case of mechanical control by means of the parking brake lever.

## Claims

1. Device (1) for controlling the braking of a trailer, **characterized by** the fact that it comprises
at least a body (2) in which is formed at least a first seat (3) communicating with at least a main gap (7) connectable to a source of a work fluid at a first pressure, at least a discharge gap (8) of the work fluid, at least a braking gap (9) communicating with a first male joint (10) connectable to the braking system of a trailer,
at least a distributor element (12) slidably housed within said first seat (3) and movable between an idle position, in which said main gap (7) is placed in communication with said service gap (11) and said braking gap (9) is placed in communication with said discharge gap (8), and at least a braking position, in which said main gap (7) is placed in communication with said braking gap (9), piloting means (13) of said distributor element (12) connectable to the braking system of a towing vehicle, said distributor element (12) defining a reaction surface communicating with said braking gap and acting in the direction opposite to said piloting means (13);
at least a second seat (4) formed in said body (2) and communicating with said first seat (3), between said first and second seats (3, 4) being provided a separation element (5), and where said second seat (4) is communicating with at least a secondary port (20) connectable to a source of work fluid at a second pressure, at least a discharge port (21) connectable to a discharge tank, at least an additional port (22) communicating with a second male joint (23) connectable to the automatic and/or parking brake of the trailer,
at least a spool (24) slidably housed within said second seat (4) and movable between a normal operating position, in which said secondary port (20) is placed in communication with said additional port (22), and at least an emergency position, in which said secondary port (20) is placed in communication with said discharge port (21), being provided at least a third chamber (4a) acting on said spool (24) to move it from the normal operating position towards the emergency position and at least a fourth chamber (4b) acting on the spool itself on the opposite side of said third chamber (4a);
being provided at least a first channel (25) connecting said third chamber (4a) with said braking gap (9) and at least a second channel (26) connecting said fourth chamber (4b) to said first male joint (10).

2. Device (1) according to claim 1, **characterized by** the fact that it comprises at least an interacting element (28) interposed between said distributor element (12) and said spool (24).

3. Device (1) according to claim 2, **characterized by** the fact that said distributor element (12) has a further work position, located downstream of said braking position, in which it contacts said interacting element (28), the latter, in turn, contacting said spool (24) to push it towards the emergency position.

4. Device (1) according to claim 2 or 3, **characterized by** the fact that said interacting element (28) is slidably inserted through said separation element (5) and by the fact that it comprises elastic means (29) acting on said interacting element (28) counteracting its displacement towards said spool (24).

5. Device (1) according to one or more of the preceding claims, **characterized by** the fact that it comprises at least an accumulation tank (30) containing a predetermined amount of the work fluid and able to dispense the work fluid contained inside it as a result of a predetermined difference in pressure between said braking gap (9) and said first male joint (10).

6. Device (1) according to one or more of the preceding claims, **characterized by** the fact that said accumulation tank (30) is interposed between said third chamber (4a) and said first male joint (10) and is placed along said second connecting channel (26).

7. Device (1) according to one or more of the preceding claims, **characterized by** the fact that it comprises at least a dispensing element (31) placed inside said tank (30) and movable between an idle position and a dispensing position to push the work fluid contained in the tank itself towards said first male joint (10), said third chamber (4a) and said second connecting channel (26) acting on said dispensing element (31) on opposite sides of the same and by the fact that it comprises first elastic means (32) arranged inside said tank (30) and acting on said dispensing element (31) to push it towards its idle position.

8. Device (1) according to one or more of the preceding claims, **characterized by** the fact that it comprises second elastic means (33) arranged within said fourth chamber (4b) and acting on said spool (24) to counteract its displacement from the normal operating position towards the emergency position.

9. Device (1) according to one or more of the preceding claims, **characterized by** the fact that the force applied by said first elastic means (32) on said dispensing element (31) is less than that applied by said second elastic means (33) on said spool (24).

10. Device (1) according to one or more of the preceding claims, **characterized by** the fact that it comprises first mechanical control means (34) operable to control the displacement of said distributor element (12) from the idle position towards the braking position, where said first control means (34) comprise at least a first lever (35) connectable to the parking brake of the towing vehicle and able to interact with said distributor element (12), said first lever (35) being movable between a first work position, in which said distributor element (12) is free to move, and a second work position, in which said distributor element (12) is pushed to the braking position.

11. Device (1) according to one or more of the preceding claims, **characterized by** the fact that it comprises second mechanical control means (38) operable to control the displacement of said spool (24) from the normal operating position towards the emergency position, where said second control means (38) comprise at least a second lever (39) connectable to the parking brake of the towing vehicle and able to interact with said spool (24), said second lever (39) being movable between a first work position in which said spool (24) is free to move, and a second work position, in which said spool (24) is pushed to the emergency position.

12. Device (1) according to claim 1, **characterized by** the fact that said body (2) is made in a single piece.

13. Device (1) according to one or more of the preceding claims, **characterized by** the fact that said first seat (3) is communicating with at least a service gap (11) connectable to at least an external user point.

14. Device (1) according to one or more of the preceding claims, **characterized by** the fact that it comprises at least a load sensing line communicating with said braking gap (9).

15. Device (1) according to one or more of the preceding claims, **characterized by** the fact that said first and second seats (3, 4) have a substantially circular cross section.

## Patentansprüche

1. Vorrichtung (1) zum Steuern des Bremsens eines Anhängers, **gekennzeichnet durch** die Tatsache, dass sie Folgendes umfasst:
wenigstens einen Körper (2), in dem wenigstens ein erster Sitz (3) geformt ist, der in Verbindung steht mit wenigstens einem Hauptspalt (7), der mit einer Quelle von Arbeitsfluid mit einem ersten Druck verbunden werden kann, wenigstens einem Ausgabespalt (8) des Arbeitsfluids, wenigstens einem Bremsspalt (9), der mit einer ersten Steckerverbindung (10) in Verbindung steht, die mit der Bremsanlage eines Anhängers verbunden werden kann,
wenigstens ein Verteilerelement (12), das verschiebbar innerhalb des ersten Sitzes (3) untergebracht und beweglich ist zwischen einer Ruhestellung, in welcher der Hauptspalt (7) in Verbindung mit dem Versorgungsspalt (11) gebracht ist und der Bremsspalt (9) in Verbindung mit dem Ausgabespalt (8) gebracht ist, und wenigstens einer Bremsstellung, in welcher der Hauptspalt (7) in Verbindung mit dem Bremsspalt (9) gebracht ist,
Ansteuerungsmittel (13) des Verteilerelements (12), die mit der Bremsanlage eines Zugfahrzeugs verbunden werden können, wobei das Verteilerelement (12) eine Reaktionsfläche definiert, die mit dem Bremsspalt in Verbindung steht und in der zu den Ansteuerungsmitteln (13) entgegengesetzten Richtung wirkt,
wenigstens einen zweiten Sitz (4), der in dem Körper (2) geformt ist und mit dem ersten Sitz (3) in Verbindung steht, wobei zwischen dem ersten und dem zweiten Sitz (3, 4) ein Trennelement (5) bereitgestellt wird und wobei der zweite Sitz (4) in Verbindung steht mit wenigstens einem sekundären Anschluss (20), der mit einer Quelle von Arbeitsfluid mit einem zweiten Druck verbunden werden kann, wenigstens einem Ausgabeanschluss (21), der mit einem Ausgabetank verbunden werden kann, wenigstens einem zusätzlichen Anschluss (22), der mit einer zweiten Steckerverbindung (23), der mit der automatischen und/oder der Feststellbremse des Anhängers verbunden werden kann, in Verbindung steht,
wenigstens eine Spule (24), die verschiebbar innerhalb des zweiten Sitzes (4) untergebracht und beweglich ist zwischen einer normalen Betriebsstellung, in welcher der sekundäre Anschluss (20) in Verbindung mit dem zusätzlichen Anschluss (22) gebracht ist, und wenigstens einer Notstellung, in welcher der sekundäre Anschluss (20) in Verbindung mit dem Ausgabeanschluss (21) gebracht ist, wobei wenigstens eine dritte Kammer (4a), die auf die Spule (24) einwirkt, um sie von der normalen Betriebsstellung zu der Notstellung hin zu bewegen, und wenigstens eine vierte Kammer (4b), die auf der entgegengesetzten Seite der dritten Kammer (4a) auf die Spule selbst einwirkt, bereitgestellt wird,
wobei wenigstens ein erster Kanal (25), der die dritte Kammer (4a) mit dem Bremsspalt (9) verbindet, und wenigstens ein zweiter Kanal (26), der die vierte Kammer (4b) mit der ersten Steckerverbindung (10) verbindet, bereitgestellt werden.

2. Vorrichtung (1) nach Anspruch 1, **gekennzeichnet durch** die Tatsache, dass sie wenigstens ein Wechselwirkungselement (28) umfasst, das zwischen dem Verteilerelement (12) und der Spule (24) eingeschoben ist.

3. Vorrichtung (1) nach Anspruch 2, **gekennzeichnet durch** die Tatsache, dass das Verteilerelement (12) eine weitere Arbeitsstellung hat, die stromabwärts von der Bremsstellung angeordnet ist, in der es das Wechselwirkungselement (28) berührt, wobei das letztere wiederum die Spule (24) berührt, um sie zu der Notstellung hin zu schieben.

4. Vorrichtung (1) nach Anspruch 2 oder 3, **gekennzeichnet durch** die Tatsache, dass das Wechselwirkungselement (28) verschiebbar durch das Trennelement (5) eingesetzt ist, und durch die Tatsache, dass sie elastische Mittel (29) umfasst, die auf das Wechselwirkungselement (28) einwirken, wobei sie dessen Verschiebung zu der Spule (24) hin entgegenwirken.

5. Vorrichtung (1) nach einem oder mehreren der vorhergehenden Ansprüche, **gekennzeichnet durch** die Tatsache, dass sie wenigstens einen Sammeltank (30) umfasst, der eine vorbestimmte Menge des Arbeitsfluids enthält und dazu in der Lage ist, das innerhalb enthaltene Arbeitsfluid als ein Ergebnis einer vorbestimmten Differenz beim Druck zwischen dem Bremsspalt (9) und der ersten Steckerverbindung (10) abzugeben.

6. Vorrichtung (1) nach einem oder mehreren der vorhergehenden Ansprüche, **gekennzeichnet durch** die Tatsache, dass der Sammeltank (30) zwischen der dritten Kammer (4a) und der ersten Steckerverbindung (10) eingeschoben ist und entlang des zweiten Verbindungskanals (26) angeordnet ist.

7. Vorrichtung (1) nach einem oder mehreren der vorhergehenden Ansprüche, **gekennzeichnet durch** die Tatsache, dass sie wenigstens ein Abgabeelement (31) umfasst, das innerhalb des Tanks (30) angeordnet und beweglich ist zwischen einer Ruhestellung und einer Abgabestellung, um das in dem Tank selbst enthaltene Arbeitsfluid zu der ersten Steckerverbindung (10) hin zu schieben, wobei die dritte Kammer (4a) und der zweite Verbindungskanal (26) auf entgegengesetzten Seiten desselben auf das Abgabeelement (31) einwirken, und durch die Tatsache, dass sie erste elastische Mittel (32) umfasst, die innerhalb des Tanks (30) angeordnet sind und auf das Abgabeelement (31) einwirken, um es zu seiner Ruhestellung hin zu schieben.

8. Vorrichtung (1) nach einem oder mehreren der vorhergehenden Ansprüche, **gekennzeichnet durch** die Tatsache, dass sie zweite elastische Mittel (33) umfasst, die innerhalb der vierten Kammer (4b) angeordnet sind und auf die Spule (24) einwirken, um ihrer Verschiebung von der normalen Betriebsstellung zu der Notstellung hin entgegenzuwirken.

9. Vorrichtung (1) nach einem oder mehreren der vorhergehenden Ansprüche, **gekennzeichnet durch** die Tatsache, dass die Kraft, die durch die ersten elastischen Mittel (32) auf das Abgabeelement (31) ausgeübt wird, geringer ist als diejenige, die durch die zweiten elastischen Mittel (33) auf die Spule (24) ausgeübt wird.

10. Vorrichtung (1) nach einem oder mehreren der vorhergehenden Ansprüche, **gekennzeichnet durch** die Tatsache, dass sie erste mechanische Steuerungsmittel (34) umfasst, die funktionsfähig sind, um die Verschiebung des Verteilerelements (12) von der Ruhestellung zu der Bremsstellung hin zu steuern, wobei die ersten mechanischen Steuerungsmittel (34) wenigstens einen ersten Hebel (35) umfassen, der mit der Feststellbremse des Zugfahrzeugs verbunden werden kann und dazu in der Lage ist, mit dem Verteilerelement (12) in Wechselwirkung zu treten, wobei der erste Hebel (35) beweglich ist zwischen einer ersten Arbeitsstellung, in der sich das Verteilerelement (12) frei bewegen kann, und einer zweiten Arbeitsstellung, in der das Verteilerelement (12) zu der Bremsstellung geschoben wird.

11. Vorrichtung (1) nach einem oder mehreren der vorhergehenden Ansprüche, **gekennzeichnet durch** die Tatsache, dass sie zweite mechanische Steuerungsmittel (38) umfasst, die funktionsfähig sind, um die Verschiebung der Spule (24) von der normalen Betriebsstellung zu der Notstellung hin zu steuern, wobei die zweiten mechanischen Steuerungsmittel (38) wenigstens einen zweiten Hebel (39) umfassen, der mit der Feststellbremse des Zugfahrzeugs verbunden werden kann und dazu in der Lage ist, mit der Spule (24) in Wechselwirkung zu treten, wobei der zweite Hebel (39) beweglich ist zwischen einer ersten Arbeitsstellung, in der sich die Spule (24) frei bewegen kann, und einer zweiten Arbeitsstellung, in der die Spule (24) zu der Notstellung geschoben wird.

12. Vorrichtung (1) nach Anspruch 1, **gekennzeichnet durch** die Tatsache, dass der Körper (2) in einem einzigen Stück hergestellt ist.

13. Vorrichtung (1) nach einem oder mehreren der vorhergehenden Ansprüche, **gekennzeichnet durch** die Tatsache, dass der erste Sitz (3) mit wenigstens einem Versorgungsspalt (11) in Verbindung steht, der mit wenigstens einem äußeren Benutzerpunkt verbunden werden kann.

14. Vorrichtung (1) nach einem oder mehreren der vorhergehenden Ansprüche, **gekennzeichnet durch** die Tatsache, dass sie wenigstens eine Lastabtastleitung umfasst, die mit dem Bremsspalt (9) in Verbindung steht.

15. Vorrichtung (1) nach einem oder mehreren der vorhergehenden Ansprüche, **gekennzeichnet durch** die Tatsache, dass der erste und der zweite Sitz (3, 4) einen im Wesentlichen kreisförmigen Querschnitt haben.

## Revendications

1. Dispositif (1) de commande de freinage d'une remorque, **caractérisé en ce qu'**il comprend
au moins un corps (2) dans lequel est formée au moins une première assise (3) communiquant avec au moins un premier espace principal (7) pouvant être raccordé à une source de fluide de travail à une première pression, au moins un espace de décharge (8) du fluide de travail, au moins un espace de freinage (9) communiquant avec un premier raccordement mâle (10) pouvant être raccordé au système de freinage de la remorque,
au moins un élément distributeur (12) logé de façon coulissante à l'intérieur de la première assise (3) et mobile entre une position de repos, dans lequel ledit espace principal (7) est placé en communication avec ledit espace de service (11) et ledit espace de freinage (9) est placé en communication avec ledit espace de décharge (8), et au moins une position de freinage, dans laquelle ledit espace principal (7) est placé en communication avec ledit espace de freinage (9),
des moyens de pilotage (13) dudit élément distributeur (12) pouvant être raccordés au système de freinage d'un véhicule tracteur, ledit élément distributeur (12) délimitant une surface de réaction communicant avec ledit espace de freinage et agissant en direction opposée desdits moyens de pilotage (13) ;
au moins une deuxième assise (4) formée dans ledit corps (2) et communicant avec ladite première assise (3), entre lesdites première et deuxième assises (3, 4) étant fourni un élément de séparation (5), et où ladite deuxième assise (4) est en communication avec au moins un conduit secondaire (20) pouvant être raccordé à une source de fluide de travail à une deuxième pression, au moins un conduit de décharge (21) pouvant être raccordé à un réservoir de décharge, au moins un conduit complémentaire (22) communicant avec un deuxième raccordement mâle (23) pouvant être raccordé au frein automatique et/ou de stationnement de la remorque,
au moins une bobine (24) logée de façon coulissante à l'intérieur de ladite deuxième assise (4) et mobile entre une position de fonctionnement normal, dans laquelle ledit conduit secondaire (20) est placé en communication avec ledit conduit complémentaire (22), et au moins une position d'urgence, dans laquelle ledit conduit secondaire (20) est placé en communication avec ledit conduit de décharge (21), au moins une troisième chambre (4a) agissant sur ladite bobine (24) pour l'amener de la position de fonctionnement normal à la position d'urgence et au moins une quatrième chambre (4b) agissant sur la bobine elle-même du côté opposé de ladite troisième chambre (4a) ;
étant fournis au moins un premier canal (25) connectant ladite troisième chambre (4a) audit espace de freinage (9) et au moins un deuxième canal (26) connectant ladite quatrième chambre (4b) audit premier raccordement mâle (10).

2. Dispositif (1) selon la revendication 1, **caractérisé en ce qu'**il comprend au moins un élément d'interaction (28) interposé entre ledit élément distributeur (12) et ladite bobine (24).

3. Dispositif (1) selon la revendication 2, **caractérisé en ce que** ledit élément distributeur (12) possède une autre position de travail, située en aval de ladite position de freinage, dans laquelle il est en contact avec ledit élément d'interaction (28), ce dernier, quant à lui, étant en contact avec ladite bobine (24) pour la pousser vers la position d'urgence.

4. Dispositif (1) selon la revendication 2 ou 3, **caractérisé en ce que** ledit élément d'interaction (28) est inséré de façon coulissante à travers ledit élément de séparation (5) et **en ce qu'**il comprend des moyens élastiques (29) agissant sur ledit élément d'interaction (28) retenant son déplacement vers ladite bobine (24).

5. Dispositif (1) selon l'une ou plusieurs des revendications précédentes, **caractérisé en ce qu'**il comprend au moins un réservoir d'accumulation (30) contenant une quantité prédéterminée de fluide de travail et apte à délivrer le fluide de travail qu'il contient sous l'effet d'une différence de pression prédéterminée entre ledit espace de freinage (9) et ledit premier raccordement mâle (10).

6. Dispositif (1) selon l'une ou plusieurs des revendications précédentes, **caractérisé en ce que** ledit réservoir d'accumulation (30) est interposé entre ladite troisième chambre (4a) et ledit premier raccordement mâle (10) et est placé le long dudit deuxième canal de connexion (26).

7. Dispositif (1) selon l'une ou plusieurs des revendications précédentes, **caractérisé en ce qu'**il comprend au moins un élément de délivrance (31) placé à l'intérieur dudit réservoir (30) et mobile entre une position de repos et une position de distribution pour pousser le fluide de travail contenu dans le réservoir vers ledit premier raccordement mâle (10), ladite troisième chambre (4a) et ledit deuxième canal de connexion (26) agissant sur ledit élément de délivrance (31) sur les côtés opposés de celui-ci et **en ce qu'**il comprend des premiers moyens élastiques (32) installés à l'intérieur dudit réservoir (30) et agissant sur ledit élément de délivrance (31) pour le pousser vers sa position de repos.

8. Dispositif (1) selon l'une ou plusieurs des revendications précédentes, **caractérisé en ce qu'**il comprend des deuxièmes moyens élastiques (33) installés à l'intérieur de ladite quatrième chambre (4b) et agissant sur ladite bobine (24) pour retenir son déplacement de la position de fonctionnement normal à la position d'urgence.

9. Dispositif (1) selon l'une ou plusieurs des revendications précédentes, **caractérisé en ce que** la force appliquée par lesdits premiers moyens élastiques (32) sur ledit élément de délivrance (31) est inférieure à celle appliquée par lesdits deuxièmes moyens élastiques (33) sur ladite bobine (24).

10. Dispositif (1) selon l'une ou plusieurs des revendications précédentes, **caractérisé en ce qu'**il comprend des premiers moyens de commande mécanique (34) exploitables pour contrôler le déplacement dudit élément distributeur (12) de la position de repos à la position de freinage, où lesdits premiers moyens de commande (34) comprennent au moins un premier levier (35) pouvant être raccordé au frein de stationnement du véhicule tracteur et apte à interagir avec ledit élément distributeur (12), ledit premier levier (35) étant mobile entre une première position de travail, dans laquelle ledit élément distributeur (12) est libre de circuler, et une deuxième position de travail, dans laquelle l'élément distributeur (12) est poussé vers la position de freinage.

11. Dispositif (1) selon l'une ou plusieurs des revendications précédentes, **caractérisé en ce qu'**il comprend des deuxièmes moyens de commande mécanique (38) exploitables pour contrôler le déplacement de ladite bobine (24) de la position de fonctionnement normal à la position d'urgence, où lesdits deuxième moyens de commande (38) comprennent au moins un deuxième levier (39) pouvant être raccordé au frein de stationnement du véhicule tracteur et apte à interagir avec ladite bobine (24), ledit deuxième levier (39) étant mobile entre une première position de travail dans laquelle ladite bobine (24) est libre de circuler, et une deuxième position de travail, dans laquelle ladite bobine (24) est poussée vers la position d'urgence.

12. Dispositif (1) selon la revendication 1, **caractérisé en ce que** ledit corps (2) est construit en une seule pièce.

13. Dispositif (1) selon l'une ou plusieurs des revendications précédentes, **caractérisé en ce que** ladite première assise (3) communique avec au moins un espace de service (11) pouvant être raccordé à au moins un point utilisateur externe.

14. Dispositif (1) selon l'une ou plusieurs des revendications précédentes, **caractérisé en ce qu'**il comprend au moins une ligne de détection de charge communicant avec ledit espace de freinage (9).

15. Dispositif (1) selon l'une ou plusieurs des revendications précédentes, **caractérisé en ce que** lesdites première et deuxième assises (3, 4) possèdent une section sensiblement circulaire.
